# EUROPÄISCHE PATENTSCHRIFT

(11) **EP 1 288 045 B1**
(45) Veröffentlichungstag und Bekanntmachung des Hinweises auf die Patenterteilung: **22.09.2004**
(21) Anmeldenummer: 02016176.6
(22) Anmeldetag: 20.07.2002
(51) Int. Cl.: B60J 7/12, B60J 1/18

(54) **Cabrioletverdeck**
Convertible soft top
Capote pour véhicule convertible

(30) Priorität: 24.08.2001 DE 10141550
(43) Veröffentlichungstag der Anmeldung: 05.03.2003
(73) Patentinhaber: PARAT Automotive Schönenbach GmbH + Co. KG, 42897 Remscheid (DE)
(72) Erfinder: Schmitt, Andreas, 85386 Eching (DE); Siring, Harald, 81377 München (DE); Kasparak, Manfred, 94089 Neureichenau (DE)
(74) Vertreter: Patentanwälte Ostriga, Sonnet, Wirths & Roche

(56) Entgegenhaltungen:
- DE-A- 3 416 285
- US-A- 3 976 324

## Beschreibung

Die Erfindung bezieht sich auf ein faltbares Verdeck für ein Cabriolet mit einem mehrteiligen, flexiblen, insbes. textilen Verdeckbezug, der wenigstens zwei mittels einer Kappnaht aneinander befestigte Teilzuschnitte umfasst, wobei der Verdeckbezug eine Dachpartie, eine, ggf. eine Heckscheibe aufnehmende, Heckpartie und im hinteren Bereich zu beiden Seiten je eine Seitenpartie aufweist, entsprechend dem Oberbegriff des Anspruchs 1.

Der einschlägige Stand der Technik ist in den Fig. 2 und 3 der beiliegenden Zeichnungen dargestellt und wird weiter unten im Rahmen der Figurenbeschreibung im einzelnen erörtert. Ein dem in Fig. 3 dargestellten Verdeck weitestgehend entsprechendes Verdeck ist auch in US-A-3 976 324 offenbart, so dass diesbezüglich auf die spätere Beschreibung der Fig. 3 verwiesen werden kann. Ein diesem ähnliches Verdeck offenbart DE 34 16 285 A, dessen nicht sehr deutliche Zeichnungen, insbes. Fig. 4 vermuten lässt, dass die in Fahrtrichtung weisenden Seitenteile des Verdeck-Heckteils senkrecht verlaufende Abschlüsse aufweisen.

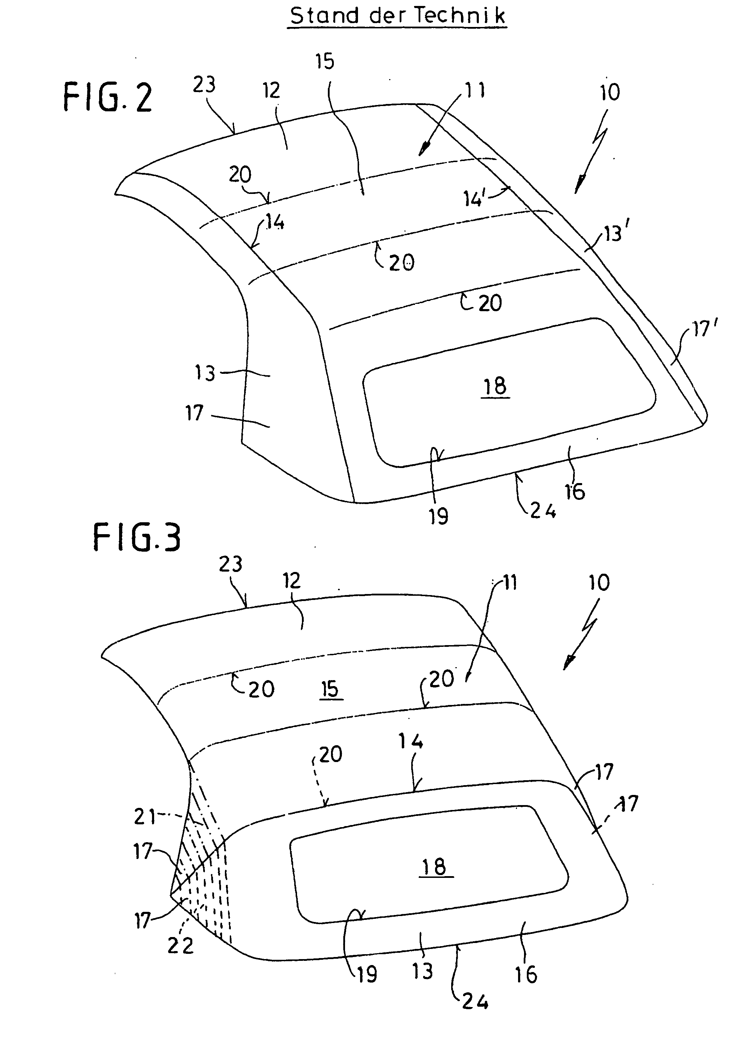

Ausgehend von dem in Fig. 3 gezeigten und in US-A-3 976 324 offenbarten Cabrioletverdeck, von dem der Oberbegriff des Anspruchs 1 abgeleitet ist, liegt der vorliegenden Erfindung die Aufgabe zugrunde, ein solches Verdeck noch weiter zu verfeinern und zu verbessern.

Die Lösung dieser Aufgabe besteht in den Merkmalen des Anspruchs 1 und ist demzufolge dadurch gekennzeichnet, dass die Seitenpartien und die Heckpartie ein einstückiges Verdeckbezugsteil bilden und dass die Kappnaht ausschließlich im wesentlichen horizontal verlaufend angeordnet ist.

Die Vorteile dieser neuen Verdeckbezuggestaltung und des neuartigen Verlaufs der Kappnacht sind zahlreich.

Zum einen wird eine neuartige und sehr ansprechende Optik erzielt.

Sodann können sowohl die Dachpartie als auch die Heckpartie des zweiteiligen Verdeckbezugs so aus einer Stoffvorlage herausgeschnitten werden, dass weniger Schnittabfall als bei dem in Bezug genommenen bekannten Verdeck entsteht. Dies rührt im wesentlichen daher, dass weder die Dachpartie noch die Heckpartie randliche Zwickel ausbilden, wie dies bei dem bekannten Verdeck der Fall ist.

Das Ablegeverhalten des neuen Cabrioletverdecks ist aufgrund erheblich reduzierter Faltung der Kappnaht zumindest so gut wie das des unmittelbar in Bezug genommenen Standes der Technik, jedoch bedeutend besser als das Ablegeverhalten des in Fig. 2 dargestellten und weiter unten beschriebenen bekannten Verdecks.

Im übrigen versteht sich die Erfindung am besten anhand der nachfolgenden Beschreibung eines in den Zeichnungen dargestellten Ausführungsbeispiels. In den Zeichnungen zeigen:

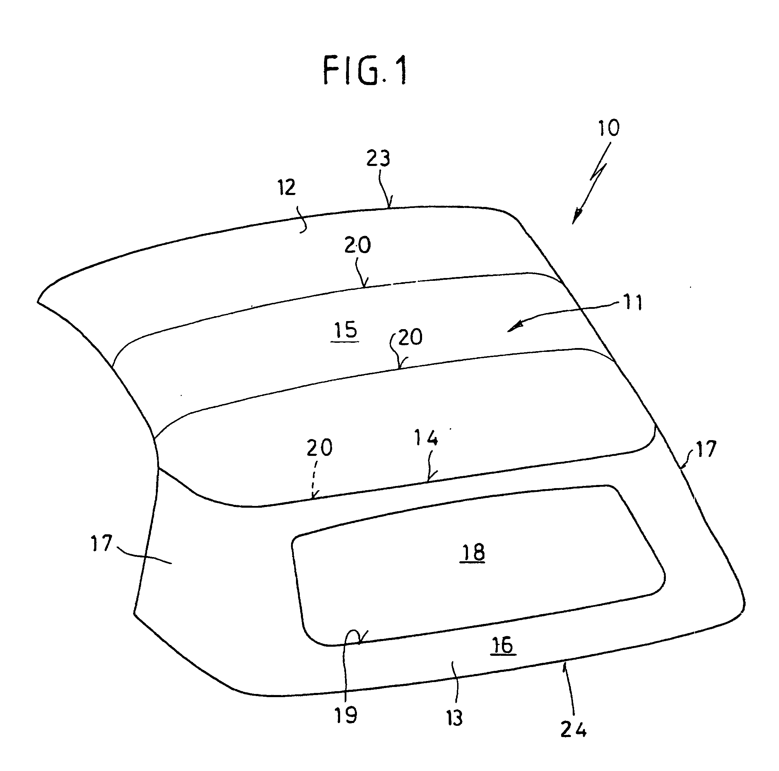

- Fig. 1: eine perspektivische Darstellung eines erfindungsgemäßen Cabrioletverdecks in Ansicht schräg von hinten,
- Fig. 2: eine entsprechende Darstellung eines ersten bekannten Verdecks, und
- Fig. 3: eine entsprechende Darstellung eines weiteren bekannten Verdecks, von dem die vorliegende Erfindung konkret ausgeht.

Allgemein umfasst ein Cabrioletverdeck 10 eine nicht dargestellte Spriegelanordnung und einen mit 11 bezeichneten Verdeckbezug 11, der flexibel ist und in der Regel aus einem textilen, auf der Innenseite wasserdicht beschichteten Gewebe besteht.

Mit 20 sind in Querrichtung verlaufende Linien, unter denen sich im Fahrzeuginnern die nicht dargestellten Spriegel erstrecken, die das Verdeck 10 im aufgerichteten Zustand in Form halten und das Öffnen und Schließen des Verdecks 10 ermöglichen.

Mit 23 ist der in den Fig. vom Verdeckstoff verdeckte vordere Verdeckrahmenteil, der sog. Windlaufspriegel angedeutet. 24 bezeichnet den ebenfalls in den Fig. vom Verdeckstoff überdeckten hintersten Verdeckrahmenteil, den sog. Spannbügel.

Bei der ersten bekannten Ausführung nach Fig. 2 ist der Verdeckbezug 11 dreiteilig. Er setzt sich zusammen aus einem großen zentralen Teilzuschnitt 12 sowie zwei spiegelbildlich gleichen seitlichen Teilzuschnitten 13, 13', die sich jeweils über die gesamte Länge des Verdecks 10 hinweg erstrecken. Der zentrale Teilzuschnitt 12 ist mit jeweils einem seitlichen Teilzuschnitt 13 bzw. 13' über eine Kappnaht 14, 14' miteinander fest verbunden. Kappnähte werden im allgemeinen zur Verbindung von Flächenelementen des Verdeckbezugs verwendet, weil sie stabil sind und sich problemlos wasser- und winddicht ausrüsten lassen.

Der großflächige Teilzuschnitt 12 des Verdeckbezugs 11 nach Fig. 2 umfasst ferner eine Dachpartie 15 und eine damit integrale, nach hinten anschließende Heckpartie 16. Im hinteren Teil bilden die seitlichen Teilzuschnitte 13 zwei Seitenpartien 17, 17' aus. In der Regel dient die Heckpartie 16 dazu, eine aus Glas oder durchsichtigem Kunststoff bestehende Heckscheibe 18 aufzunehmen. Dazu ist in dem Verdeckbezug 11 im Bereich der Heckpartie 16 ein entsprechender Ausschnitt 19 vorhanden.

Dieses in Fig. 2 dargestellte bekannte Cabrioletverdeck ist relativ aufwendig gearbeitet, zumal es aus drei miteinander zu verbindenden Teilzuschnitten 12, 13 und 13' besteht und zwei Kappnähte 14, 14' aufweist. Da die Kappnähte 14, 14', vorn am Windlaufspriegel 23 beginnend und hinten am sog. Spannbügel oder Abschlussprofil 24 endend, im wesentlichen ausschließlich in Längsrichtung des Fahrzeugs verlaufen, stellen sie bei der Faltenbildung beim Öffnen und Ablegen des Verdecks 10 erhebliche Hindernisse dar. Auch falten sich die Kappnähte mehrfach übereinander, wodurch deren Falten erheblich auftragen und auch Verdeckbeschädigungen hervorrufen können. Insgesamt lässt also das Ablegeverhalten des bekannten Verdecks 10 nach Fig. 2 zu wünschen übrig.

Im Stand der Technik ist auch eine Verdeckausführung bekannt, wie sie in Fig. 3 dargestellt ist und von der die Erfindung ausgeht.

Während das Cabrioletverdeck nach Fig. 2 drei Teilzuschnitte 12, 13, 13' und zwei in Längsrichtung des Fahrzeugs verlaufende Kappnähte 14 und 14' hat, umfasst das Verdeck 10 des Standes der Technik nach Fig. 3 nur zwei Teilzuschnitte, nämlich einen großen Teilzuschnitt 12 und einen kleineren Teilzuschnitt 13. Der größere vordere Teilzuschnitt 12 bildet hier die Dachpartie 15, der kleinere hintere Teilzuschnitt 13 die Heckpartie 16. Demzufolge ist zur Verbindung dieser beiden Teilzuschnitte 12 und 13 nur noch eine einzige Kappnaht 14 vorhanden.

Diese Kappnaht 14 verläuft im wesentlichen parallel zu dem nicht dargestellten Eckspriegel, der gewissermaßen die sog. C-Säule eines Cabrioletverdecks darstellt. Ebenfalls aus Fig. 3 ist ersichtlich, dass die Kappnaht 14 im wesentlichen nur quer zur Fahrtrichtung verläuft. Dadurch stellt diese Kappnaht 14 beim Öffnen und Ablegen des Verdecks 10 der Faltenbildung im Verdeckbezug 11 deutlich weniger Hindernisse in den Weg. Das Ablegeverhalten des Verdecks 10 nach Fig. 3 ist also günstiger als das des Verdecks 10 nach Fig. 2.

Auch das in Fig. 1 dargestellte erfindungsgemäße Verdeck 10 hat einen Verdeckbezug 11, der nur zwei Teilzuschnitte 12 und 13 aufweist, von denen der Teilzuschnitt 12 die Dachpartie 15 und der Teilzuschnitt 13 die Heckpartie 16 ausbildet, die durch eine gemeinsame Kappnaht 14 miteinander verbunden sind.

Die Besonderheit dieses Verdecks gegenüber den bekannten Verdecken, insbesondere dem in Fig. 3 dargestellten, besteht nun darin, dass die Seitenpartien 17 ausschließlich integrale Bestandteile der Heckpartie 16 sind. Infolgedessen verläuft die Kappnaht 14 im wesentlichen auch ausschließlich horizontal bzw. auf gleichem Höhenniveau.

Die in Fig. 3 beim Stand der Technik angedeuteten seitlichen Zwickelpartien 21 an den hinteren Enden des Teilzuschnitts 12 und die seitlichen Zwickelpartien 22 an den daran angrenzenden seitlichen Enden des Teilzuschnitts 13 sind damit vermieden. Diese Zwickel 21 und 22 waren bislang für nicht unerheblichen Verschnitt beim Zuschneiden der Teile des Verdeckbezugs 11 verantwortlich.

Wie Fig. 1 deutlich macht, bestehen die Teilzuschnitte 12 für die Dachpartie 15 und der Teilzuschnitt 13 für die Heckpartie 16 einschließlich der Seitenpartien 17 jeweils aus einem fast rechteckigen Stoffstück ohne über den Umriss weit hinaus ragende Spitzen, Zwickel od.dgl.

## Patentansprüche

1. Faltbares Verdeck (10) für ein Cabriolet mit einem mehrteiligen, flexiblen, insbes. textilen Verdeckbezug (11), der wenigstens zwei mittels einer Kappnaht (14) aneinander befestigte Teilzuschnitte (12, 13) umfasst, wobei der Verdeckbezug (11) eine Dachpartie (15), eine, ggf. eine Heckscheibe (18) aufnehmende, Heckpartie (16) und im hinteren Bereich zu beiden Seiten je eine Seitenpartie (17) aufweist, **dadurch gekennzeichnet, dass** die Seitenpartien (17) und die Heckpartie (16) ein einstückiges Verdeckbezugsteil bilden und dass die Kappnaht (14) ausschließlich im wesentlichen horizontal verlaufend angeordnet ist.

## Claims

1. Foldable hood (10) for a convertible comprising a multipart, flexible, in particular textile hood cover (11), which comprises at least two component blanks (12, 13) fastened to one another by means of a fell seam (14), wherein the hood cover (11) comprises a roof portion (15), a rear portion (16) optionally receiving a rear window pane (18), and in the rear region a lateral portion (17) on either side, **characterized in that** the lateral portions (17) and the rear portion (16) form an integral hood cover part and that the fell seam (14) is disposed exclusively in a substantially horizontally extending manner.

## Revendications

1. Capote (10) pliante pour un cabriolet, avec un revêtement de capote (11) en particulier textile, en plusieurs parties, flexible, comprenant au moins deux flans partiels (12, 13), fixés l'un à l'autre à l'aide d'une soudure de reprise (14), le revêtement de capote (11) présentant une partie toit (15), une partie arrière (16), supportant le cas échéant une vitre arrière (18) et, dans la zone arrière, dans chacun des deux côtés, une partie latérale (17), **caractérisée en ce que** les parties latérales (17) et la partie arrière (16) forment une partie de revêtement de capote monobloc, et **en ce que** la soudure de reprise (14) est disposée en s'étendant exclusivement pratiquement horizontalement.
